Europäisches Patentamt

European Patent Office

Office européen des brevets

(19)

(11) Veröffentlichungsnummer: **0 170 814**
**B1**

(12) **EUROPÄISCHE PATENTSCHRIFT**

(45) Veröffentlichungstag der Patentschrift :
04.05.88

(51) Int. Cl.⁴ : **H 02 B 1/04**

(21) Anmeldenummer : 85106807.2

(22) Anmeldetag : 03.06.85

(54) Spannfeder für die schraubenlose Befestigung von elektrischen Einbau-Geräten.

(30) Priorität : 10.07.84 CH 3332/84

(43) Veröffentlichungstag der Anmeldung :
12.02.86 Patentblatt 86/07

(45) Bekanntmachung des Hinweises auf die Patenterteilung : 04.05.88 Patentblatt 88/18

(84) Benannte Vertragsstaaten :
AT CH DE GB LI

(56) Entgegenhaltungen :
DE-A- 2 430 707
FR-A- 1 565 734
US-A- 3 706 869
US-A- 3 950 066

(73) Patentinhaber : FELLER AG.
Bergstrasse
CH-8810 Horgen (CH)

(72) Erfinder : Leuthold, Karl
In der Wässeri 35
CH-8047 Zürich (CH)

(74) Vertreter : Scheidegger, Zwicky, Werner & Co.
Stampfenbachstrasse 48 Postfach
CH-8023 Zürich (CH)

EP 0 170 814 B1

## Beschreibung

Die Erfindung betrifft eine Spannfeder für die schraubenlose Befestigung von elektrischen Einbau-Geräten in einem Einbau-Ausschnitt eines Gehäuses oder einer Schalttafel mittels am Rand der gebogenen Spannfeder angeordneter Zähne.

Spannfedern dieser Art aus Stahl oder Kunststoff sind bekannt, um ein elektrisches Einbau-Gerät, wie beispielsweise einen Gerätestecker oder eine Gerätesteckdose, in einem Einbau-Ausschnitt eines Gehäuses oder einer Schalttafel schraubenlos zu befestigen, wobei das elektrische Einbau-Gerät mit beidseitig angebrachten Spannfedern durch den Einbau-Ausschnitt durchgestossen wird und dann mittels der Zähne an der Spannfeder vorwiegend kraftschlüssig in dem Einbau-Ausschnitt festgehalten ist. Die bekannten Spannfedern weisen jedoch den entscheidenden Nachteil auf, dass sie bei auf das Einbau-Gerät ausgeübten grossen Zugkräften, wie beispielsweise beim Lösen einer Steckerverbindung, das Einbau-Gerät nicht zuverlässig in dem Einbau-Ausschnitt festhalten. Ein weiterer Nachteil der bekannten Spannfedern besteht darin, dass je nach der Wandstärke des Gehäuses oder der Schalttafel der Einbau-Ausschnitt in der lichten Weite unterschiedlich ausgebildet sein muss, d. h. die Abmessungen des Einbau-Ausschnittes müssen für ein Gehäuse mit einer Wandstärke von beispielsweise 1 mm anders gewählt werden als für ein Gehäuse mit einer Wandstärke von 1,5 mm oder beispielsweise 3 mm.

Ein aus der DE-OS 2 430 707 bekanntes Halteelement für die schraubenlose Befestigung von Einbau-Geräten soll auch für unterschiedliche Wandstärken bis 2 mm geeignet sein, ist aber besonders für Herdblenden vorgesehen, die allseitig emailliert sind und daher eine sehr glatte Oberfläche besitzen. Das bekannte Halteelement ist im wesentlichen im Querschnitt U-förmig ausgebildet und die beiden zueinander parallelen Schenkel weisen am Stirnende die mit einer Verzahnung versehene Klemmkante auf, die beim Einbau gegen die Innenkante des Einbau-Ausschnitts einer Herdblende zu liegen kommt und zur Herdblenden-Innenseite fast parallel verläuft. Bei einer emaillierten glatten Oberfläche ist dieses Prinzip anwendbar, aber nicht geeignet, wenn das Gehäuse oder die Schalttafel aus Weichmetall oder Kunststoff besteht, in welches Material sich die gezahnte Klemmkante eingraben würde, vor allem wenn eine häufige Steck- und Auszieh-Beanspruchung beim Einbaugerät vorliegt, so dass infolgedessen schon nach kurzer Zeit eine lockere Gerätehalterung beanstandet würde.

Die der vorliegenden Erfindung zugrunde liegende Aufgabe bestand daher darin, eine Spannfeder zu schaffen, die es ermöglicht, ein elektrisches Einbau-Gerät schraubenlos in einem Einbau-Ausschnitt zu befestigen, der abmessungsmässig immer gleich gross in einem Gehäuse oder einer Schalttafel mit einer Wandstärke von 1 mm oder einer solchen von 1,5 mm etc. bis zu einer Wandstärke von 3 mm ausgebildet ist. Ausserdem soll die Spannfeder so ausgebildet sein, dass sie grossen auf das Einbau-Gerät einwirkenden Zugkräften in der Grössenordnung von 120 Newton oder darüber standzuhalten vermag, ohne dass sich das Einbau-Gerät lockert. Zur Lösung dieser Aufgaben besitzt die Spannfeder die Merkmale gemäss Anspruch 1. Der Vorteil dieser Spannfeder besteht darin, dass bei einem Gehäuse oder einer Schalttafel unabhängig von der jeweiligen Wandstärke in einem Grössenbereich von 1 bis 3 mm mit Zwischenabstufungen von beispielsweise 0,5 mm entsprechend dem Zahnabstand an der Spannfeder der Einbau-Ausschnitt immer gleich gross herzustellen ist, um ein Einbau-Gerät darin zu befestigen, auf das auch grosse Zugkräfte in der vorerwähnten Grössenordnung einwirken können, ohne dass die Spannfeder an ihrer Wirksamkeit eines sicheren Festhaltens etwas einbüsst, wobei das Festhalten formschlüssig erfolgt.

Zudem gewährleistet diese Art der Spannfederkonstruktion eine einwandfrei elektrisch und magnetisch wirkende Verbindung zu den Gehäusen.

Weitere Einzelheiten und Vorteile der Erfindung ergeben sich aus der nachfolgenden Beschreibung und den Zeichnungen, in denen ein Ausführungsbeispiel der Spannfeder dargestellt ist. Es zeigen :

Fig. 1 den Zuschnitt der Spannfeder, in grösserem Massstab ;

Fig. 2 die Spannfeder gemäss Fig. 1, in fertig gebogener Form in Draufsicht ;

Fig. 3 eine Seitenansicht der Spannfeder gemäss Fig. 2 ;

Fig. 4a und b die an der Seite eines Einbau-Gerätes angeordnete Spannfeder im eingebauten Zustand in einem Gehäuse mit der Wandstärke d1 gemäss Fig. 4a und der Wandstärke d2 gemäss Fig. 4b.

Die Spannfeder oder Haltefeder 1 weist zwei Schenkel 2 und 3 auf, die an einem Ende der Schenkel über einen Steg 4 einstückig miteinander verbunden sind. An den die beiden Schenkel miteinander verbindenden Steg schliesst sich auf der Mitte eine Zunge 5 an, die zur Befestigung der Spannfeder 1 an der Seite eines Einbau-Gerätes dient.

Die beiden im Abstand parallel zueinander verlaufenden Schenkel 2 und 3 weisen an ihren zueinander parallelen Rändern je eine Reihe von Zähnen auf, und zwar weist der Schenkel 2 der Spannfeder 1 an seinem aussen liegenden Rand 6 zwei Zähne 7 und 8 auf und an seinem innen liegenden Rand 9 zwei Zähne 10 und 11, die bezüglich des freien Endes des Schenkels 2 versetzt zu den Zähnen 7 und 8 am gegenüberliegenden Rand 6 des Schenkels angeordnet sind. Dabei ist der Zahn 10 am innen liegenden Schenkelrand 9 etwa auf der Mitte des Abstandes zwischen den Zähnen 7 und 8 am aussen liegenden Schenkelrand 6 angeordnet. Es können auch mehr als zwei Zähne an jedem Schenkelrand angeordnet sein, wenn noch engere Abstufungen hinsichtlich der Materialstärke des Gehäuses, in dessen Einbau-Ausschnitt die Spannfeder festsitzen soll, zu berücksichtigen sind, wie nachstehend noch erläutert wird.

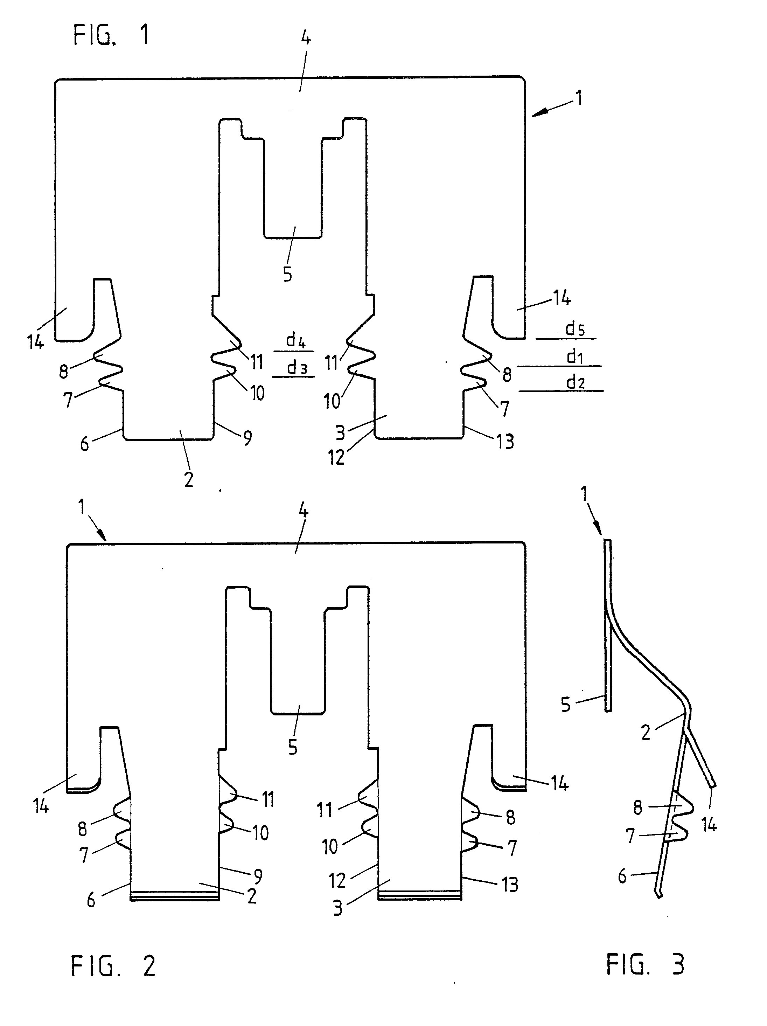

Der Schenkel 3 der Spannfeder 1 ist bezüglich der Anzahl und Anordnung der Zähne am innen liegenden Rand 12 spiegelbildlich zu dem Schenkel 2 bzw. zu den Zähnen 10 und 11 ausgebildet, weshalb die Zähne mit den gleichen Bezugszahlen 10 und 11 bezeichnet sind. Das gleiche gilt im wesentlichen auch für die am aussen liegenden Rand 13 des Schenkels 3 ausgebildeten Zähne 7 und 8. Zwischen dem Abstand der Zähne 7 und 8 vom freien Ende des Schenkels 2 und dem entsprechenden Abstand der Zähne 7 und 8 vom freien Ende des Schenkels 3 kann vorzugsweise noch eine geringe Differenz von ca. 0,1 mm vorhanden sein. Aus den Fig. 1 und 3 geht ferner hervor, dass die Zähne 7 und 8 sowie die Zähne 10 und 11 eine jeweils aus zwei Zähnen bestehende Zahnreihe mit zum freien Ende des Schenkels hin aufeinanderfolgend kleinerer Zahnhöhe bilden, d. h. die Zahnhöhe des Zahns 8 ist grösser als die Zahnhöhe des Zahns 7 und die Zahnhöhe des Zahns 11 grösser als die Zahnhöhe des Zahns 10.

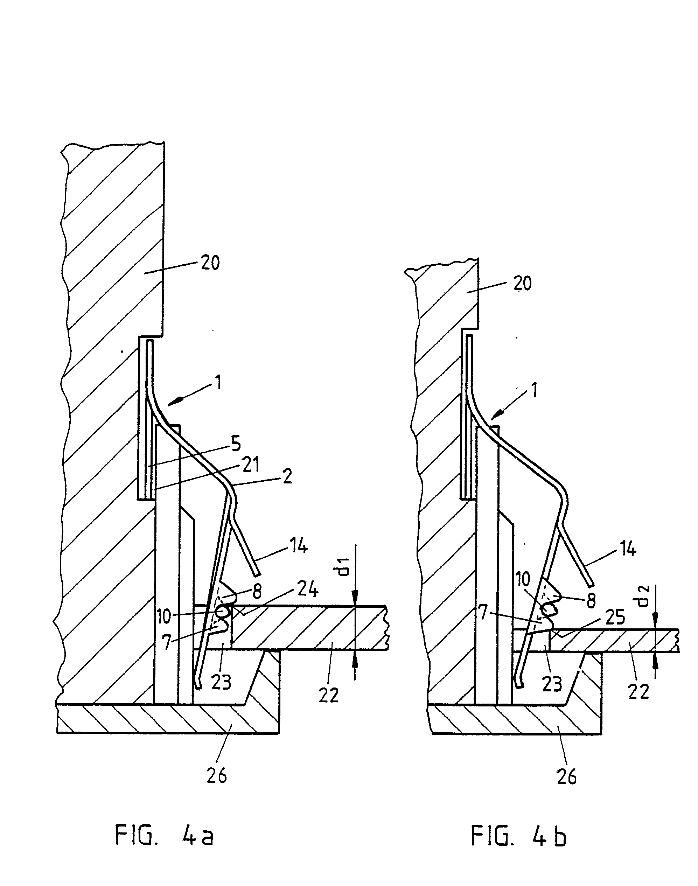

Aus Fig. 4a geht hervor, welchen Sinn diese Massnahme und die gegenseitige Versetzung der Zähne an den einander gegenüberliegenden Rändern jedes der Schenkel 2 und 3 hat. Gemäss Fig. 4a ist eine Spannfeder 1 an der einen Seite eines abgebrochen dargestellten Einbau-Gerätes 20 festgehalten, wobei die auf der Mitte der Spannfeder 1 angeordnete Zunge 5 in eine Nut 21 an der Seite des Einbau-Gerätes 20 hineingeschoben ist. Das abgebrochen dargestellte Gehäuse 22 oder die Schalttafel weisen einen Einbau-Ausschnitt 23 auf, in welchem das Einbau-Gerät 20, wie beispielsweise ein Gerätestecker oder eine Gerätesteckdose, mittels beidseitig angebrachter Spannfedern 1, von denen in Fig. 4a nur die auf einer Seite angeordnete Spannfeder dargestellt ist, schraubenlos befestigt ist. Das Gehäuse 22 besitzt eine Wandstärke d1, kann aber auch eine geringere Wandstärke d2 besitzen, was in Fig. 4b dargestellt ist. Beispielsweise kann d1 = 2 mm und d2 = 1 mm betragen. Der Einbau-Ausschnitt 23 soll in jedem Fall gleich gross ausgebildet sein. Die Spannfeder 1 ist bei dem Gehäuse 22 mit der Wandstärke d1 derart angeordnet, dass von jedem der beiden Schenkel 2 und 3 der Spannfeder 1 der grössere Zahn 8 gegen die innenseitige Kante 24 des Einbau-Ausschnittes 23 zur Anlage kommt. Dadurch ist das Einbau-Gerät 20 in dem Einbau-Ausschnitt 23 festgehalten. Bei der in Fig. 4b dargestellten Stellung der Spannfeder 1 kommt bei einem Gehäuse 22 mit der Wandstärke d2 von jedem Schenkel 2 und 3 der Spannfeder 1 der Zahn 7 zur Anlage gegen die innenseitige Kante 25 des Einbau-Ausschnittes 23. In Fig. 1 sind zu den Zähnen 7 und 8 führende Linien eingezeichnet, die mit der vorerwähnten Wandstärke bezeichnet sind, bei welcher diese Zähne 7 bzw. 8 zur Wirkung kommen, d. h. beispielsweise bei der Wandstärke 1 mm oder 2 mm.

Da an den beiden innen liegenden Rändern 9 und 12 die Zähne 10 und 11 versetzt zu den Zähnen 7 und 8 am gegenüberliegenden Schenkelrand angeordnet sind, dienen diese Zähne für weitere Wandstärken d3 und d4 des Gehäuses 22. Die zwischen den Linien d1 und d2 liegende Linie d3 ist dann einer Wandstärke = 1,5 mm zuzuordnen, und die Linie d4 ist einer Wandstärke = 2,5 mm zuzuordnen. Die Zähne 10 und 11 an den beiden innen liegenden Rändern der beiden Spannfeder-Schenkel 2 und 3 kommen nach dem gleichen Prinzip zur Wirkung, wie es in Fig. 4 bezüglich der Zähne 7 und 8 dargestellt ist. Die Spannfeder 1 wird durch die Druckbelastung der vorgängigen innen liegenden Zähne 7 bzw. 8 oder 10 im Ausschnitt 23 in eine veränderte Lage gebracht, bei welcher durch eine leichte Verwindung der Schenkel 2 und 3 die funktionell rastenden Zähne 10 bzw. 8 oder 11 leicht angehoben und damit sicher an die jeweilige Unterkante des Ausschnittes angedrückt werden.

Zusätzlich besitzt die Spannfeder 1 an die beiden Schenkel 2 und 3 nach aussen anschliessend noch jeweils eine angeformte Zunge 14, die gemäss Fig. 3 zur konvexen Seite des Schenkels 2 bzw. 3 abgebogen ist. Das Ende dieser Zunge 14 befindet sich in einem noch grösseren Abstand vom freien Ende des Schenkels 2 bzw. 3 als der grösste Zahn am Rand des Schenkels, was bedeutet, dass diese Zunge innenseitig zur Anlage gegen ein Gehäuse 22 mit einer noch grösseren Wandstärke von beispielsweise 3 mm bestimmt ist. Wie bei den Zähnen kommt die Spannfeder 1 auch hier immer mit zwei Zungen 14 zur Anlage gegen das Gehäuse 22. Ein am vorderen Ende des Einbau-Gerätes 20 angebrachter Flansch 26 deckt den Einbau-Ausschnitt 23 ab und liegt mit seinem Rand gegen das Gehäuse 22 an.

Die Spannfeder dient nicht nur für die Befestigung des elektrischen Einbau-Gerätes in einem Gehäuse, sondern sie bildet gleichzeitig auch eine Hochfrequenzerdung, so dass es sich erübrigt, eine zusätzliche Stromableitverbindung zwischen dem Einbau-Gerät und dem Gehäuse vorzusehen.

**Patentansprüche**

1. Spannfeder für die schraubenlose Befestigung von elektrischen Einbaugeräten (20) in einem Einbau-Ausschnitt (23) eines Gehäuses (22) oder einer Schalttafel mittels am Rand der gebogenen Spannfeder (1) angeordneter Zähne (7, 8 ; 10, 11), dadurch gekennzeichnet, dass die Spannfeder (1, 2) im konstanten Abstand nebeneinander in einer gemeinsamen Fläche mit identischem Profil konvex gebogene und an einem Ende (4) einstückig miteinander verbundene Schenkel (2, 3) und an den einander gegenüberliegenden Längsrändern (6, 9 ; 12, 13) jedes der Schenkel (2, 3) bezüglich des Abstandes vom freien Ende des Schenkels versetzt zueinander angeordnete und zur konvexen Seite des Schenkels umgebogene Zähne (7, 8 ; 10, 11) aufweist, von denen jeweils zwei zur Anlage gegen die Innenkante (24, 25) eines Einbau-Ausschnittes (23) bestimmt sind.

2. Spannfeder nach Anspruch 1, dadurch gekennzeichnet, dass die Zähne (7, 8 ; 10, 11) an jedem der Schenkel-Längsränder (6, 9 ; 12, 13) eine Zahnreihe mit vom freien Ende jedes Schenkels aus aufeinanderfolgend grösserer Zahnhöhe bilden.

3. Spannfeder nach Anspruch 1, dadurch gekennzeichnet, dass die Zähne (7, 8 ; 10, 11) an den einander gegenüberliegenden Längsrändern (6, 9 ; 12, 13) jedes der Schenkel (2, 3) um etwa eine halbe Zahnteilung gegeneinander versetzt sind.

4. Spannfeder nach Anspruch 1, dadurch gekennzeichnet, dass die Zähne (10, 11) an den innen liegenden Längsrändern (9, 12) der beiden Schenkel (2, 3) der Spannfeder (1) spiegelbildlich gleich ausgebildet und in etwa gleichen Abständen vom freien Ende der Schenkel angeordnet sind.

5. Spannfeder nach Anspruch 1, dadurch gekennzeichnet, dass die Zähne (7, 8) an den aussen liegenden Längsrändern (6, 13) der beiden Schenkel (2, 3) der Spannfeder (1) spiegelbildlich gleich ausgebildet und in etwa gleichen Abständen vom freien Ende der Schenkel angeordnet sind.

6. Spannfeder nach Anspruch 5, dadurch gekennzeichnet, dass die Zähne (7, 8) an den beiden aussen liegenden Längsrändern (6, 13) der beiden Schenkel (2, 3) um etwa 0,1 mm zueinander versetzt sind, um Toleranzen in der Materialstärke des Gehäuses oder der Schalttafel zu berücksichtigen.

7. Spannfeder nach Anspruch 4 und 5, dadurch gekennzeichnet, dass jede Zahnreihe an den Längsrändern (6, 9 ; 12, 13) jeder der beiden Spannfeder-Schenkel (2, 3) zwei Zähne (7, 8 ; 10, 11) umfasst und der erste Zahn (10) der Zahnreihe am innen liegenden Schenkelrand (9, 12) etwa auf der Mitte des Abstandes zwischen den Zähnen (7, 8) am aussen liegenden Schenkelrand (6, 13) angeordnet ist.

8. Spannfeder nach Anspruch 1, dadurch gekennzeichnet, dass zusätzlich zu den beiden verzahnten Schenkeln (2, 3) im Abstand von deren aussen liegenden Längsrändern (6, 13) jeweils eine angeformte Zunge (14) zur konvexen Seite der Schenkel (2, 3) hin abgebogen ist und das zur Anlage innenseitig gegen ein Gehäuse (22) oder eine Schalttafel bestimmte Ende der Zunge (14) einen grösseren Abstand vom freien Ende des Schenkels (2, 3) als der grösste Zahn (8) in der Zahnreihe am Schenkelrand (6, 13) aufweist.

9. Spannfeder nach einem der Ansprüche 1 bis 8, dadurch gekennzeichnet, dass sie aus elektrisch leitendem Material besteht und eine Hochfrequenzerdung zur Stromableitung auf das Gehäuse bildet.

## Claims

1. A retaining spring for securing electrical insert devices (20) without the use of screwed fasteners in a corresponding recess (23) in a casing (22) or switchboard by means of teeth (7, 8 ; 10, 11) disposed on the edge of the bent retaining spring (1), characterised in that the retaining spring (1, 2) has limbs (2, 3) which are bent into a convex shape at a constant distance from one another in a common surface having an identical profile and which are unitary at one end (4), and on the opposite longitudinal edges (6, 9 ; 12, 13) of each limb (2, 3) the retaining spring (1, 2) has teeth (7, 8 ; 10, 11) which are staggered relatively to one another as referred to their distance from the free end of the limb and which are bent round towards the convex side of the limb, two of the teeth being adapted to engage the inside edge (24, 25) of a device-receiving recess (23).

2. A spring according to claim 1, characterised in that the teeth (7, 8 ; 10, 11) on each of the limb longitudinal edges (8, 9 ; 12, 13) form a row in which the teeth are of consecutively greater height as considered from the free end of each limb.

3. A spring according to claim 1, characterised in that the teeth (7, 8 ; 10, 11) on the opposite longitudinal edges (6, 9 ; 12, 13) of each limb (2, 3) are staggered relatively to one another by approximately one-half of tooth pitch.

4. A spring according to claim 1, characterised in that the teeth (10, 11) on the inner longitudinal edges (9, 12) of the two limbs (2, 3) are of mirror image construction to one another and are disposed at substantially equal distances from the free end of the limbs.

5. A spring according to claim 1, characterised in that the teeth (7, 8) on the outside longitudinal edges (6, 13) of the two limbs (2, 3) are of mirror image construction to one another and are disposed at substantially the same distances from the free end of the limbs.

6. A spring according to claim 5, characterised in that the teeth (7, 8) on the two outer longitudinal edges (6, 13) of the two limbs (2, 3) are offset by approximately 0.1 mm from one another to allow for tolerances in the thickness of the material of the casing or switchboard.

7. A spring according to claims 4 and 5, characterised in that each tooth row on the longitudinal edges (6, 9 ; 12, 13) of each of the two limbs (2, 3) comprises two teeth (7, 8 ; 10, 11) and the first tooth (10) of the row on the inside limb edge (9, 12) is disposed substantially midway between the teeth (7, 8) on the outer limb edge (6, 13).

8. A spring according to claim 1, characterised in that in addition to the two toothed limbs (2, 3), a formed-on tongue (14) is bent towards the convex side of the limbs (2, 3) at a distance from the outside longitudinal edges (6, 13) of the limbs (2, 3), and the tongue end adapted to engage the inside of a casing (22) or switchboard is further away from the free end of the limb (2, 3) than the largest tooth (8) of the row on the limb edge (6, 13).

9. A spring according to any of claims 1 — 8, characterised in that it is made of an electrically conductive material and is operative as a highfrequency earthing to discharge current to the casing.

**Revendications**

1. Ressort de retenue pour la fixation sans vis d'appareils électriques incorporés (20) dans une découpure de montage (23) d'un boîtier (22) ou d'un panneau de distribution au moyen de dents (7, 8 ; 10, 11) prevues sur le bord du ressort courbé (1), caractérisé en ce que le ressort de retenue (1, 2) présente des branches (2, 3) à profils identiques courbées dans une figuration convexe et arrangées à une distance constante l'une à côté de l'autre dans un plan commun et reliées à l'une de leurs extrémités (4), le ressort présentant sur les bords opposés (6, 9 ; 12, 13) de chaque branche 62,3) des dents (7, 8 ; 10, 11) décalées l'une par rapport à l'autre et par rapport à leur distance de l'extrémité libre de la branche et qui sont courbées en direction du côté convexe de la branche, deux des dents étant destinées à venir s'engager contre le bord intérieur (24, 25) de la découpure de montage (23).

2. Ressort de retenue selon la revendication 1, caractérisé en ce que les dents (7, 8 ;10, 11) sur chaque bord longitudinal (6, 9 ; 12, 13) des branches forment une rangée de dents dans laquelle les dents, vues à partir de l'extrémité libre de chaque branche, présentent consécutivement une plus grande hauteur.

3. Ressort de retenue selon la revendication 1, caractérisé en ce que les dents (7, 8 ; 10, 11) sur chaque bord longitudinal (6, 9 ; 12, 13) des branches (2, 3) sont décalées l'une par rapport à l'autre d'un demi pas.

4. Ressort de retenue selon la revendication 1, caractérisé en ce que les dents (10, 11) sur les bords longitudinaux intérieurs (9, 12) des deux branches (2, 3) du ressort (1) sont construites en image symétrique et disposées à des distances sensiblement égales de l'extrémité libre des branches.

5. Ressort de retenue selon la revendication 1, caractérisé en ce que les dents (7, 8) sur les bords longitudinaux extérieurs (6, 13) des deux branches (2, 3) du ressort (1) sont construites en image symétrique et disposées à des distances sensiblement égales de l'extrémité libre des branches.

6. Ressort de retenue selon la revendication 5, caractérisé en ce que les dents (7, 8) sur les bords longitudinaux extérieurs (6, 13) des deux branches (2, 3) sont décalées l'une par rapport à l'autre d'environ 0,1 mm pour ainsi tenir compte de tolérances dans l'épaisseur du matériel du boîtier ou du panneau de distribution.

7. Ressort de retenue selon les revendications 4 et 5, caractérisé en ce que chaque rangée de dents sur les bords longitudinaux (6, 9 ; 12, 13) de chacune des deux branches (2, 3) du ressort comprend deux dents (7, 8 ; 10, 11) et en ce que la première dent (10) de la rangée de dents sur le bord intérieur (9, 12) des branches est arrangée environ au milieu de la distance entre les dents (7, 8) sur le bord extérieur (6, 13) des branches.

8. Ressort de retenue selon la revendication 1, caractérisé en ce qu'en plus des deux branches dentées (2, 3) une languette (14) intégrale est prévue à une distance de chacun des bords longitudinaux extérieurs (6, 13) et courbée du côté convexe des branches (2, 3) et en ce que l'extrémité de la languette (14) destinée à venir en appui sur le côté intérieur d'un boîtier (22) se trouve à une distance de l'extrémité libre de la branche (2, 3) qui est plus grande que celle de la plus grande dent (8) dans la rangée de dents sur le bord (6, 13) des branches (6, 13).

9. Ressort de retenue selon l'une des revendications 1 à 8, caractérisé en ce qu'il est constitué d'un matériel électriquement conducteur et en ce qu'il forme une mise à terre à haute fréquence pour décharger du courant électrique sur le boîtier.

FIG. 1

FIG. 2

FIG. 3

$\dfrac{d_4}{d_3}$

$d_5$

$d_1$

$d_2$

FIG. 4 a

FIG. 4 b